# EUROPEAN PATENT APPLICATION

(11) **EP 1 465 056 A2**
(43) Date of publication of application: **06.10.2004**
(21) Application number: 04250562.8
(22) Date of filing: 03.02.2004
(51) Int. Cl.: G06F 3/12

(54) **Exposing mobile-enterprise printers using a universal plug and play proxy**

(30) Priority: 20.02.2003 US 370340
(71) Applicant: Hewlett-Packard Development Company, L.P., Houston, Texas 77070 (US)
(72) Inventor: Bunn, Jeremy, Kelso, WA 98626 (US); Anderson, Jeff M., Camas, WA 98607 (US); Hall, David M., Camas, WA 98607 (US)
(74) Representative: Jackson, Richard Eric

(57) **Abstract**

A method for exposing mobile-enterprise printers (100, 110, 122, 130) on a network (20, 42) includes receiving a remotely generated request to identify at least one network-coupled mobile enterprise print service (610), using a UPnP print-service proxy (810) to identify a mobile-enterprise print service (610) communicatively coupled on the network (20, 42), and using the mobile-enterprise print service (610) to identify at least one printer device (100, 110, 122, 130) communicatively coupled to the network (20, 42).

## Description

### BACKGROUND

Portable devices that link users to communication services are popular and widespread. Personal digital assistants (PDAs) include pocket personal computers with a range of computing capabilities. Cellular telephones are commercially available with more and more functionality that until recently has been provided by computing devices interconnected using wired communication links. For example, cellular telephone service providers now provide email services, paging, and a host of other information services. Laptop computers are configured with processors and memory that enable them to rival desktop computers with regard to computing capabilities and speed.

One of the driving forces behind the popularity of mobile-communication devices and mobile computing is the ability to interact with devices coupled to the Internet and other networks from anywhere within the reach of a wireless communication service provider. Wireless communication links allow the operator of a mobile computing device and/or a mobile-communication device to access data and devices coupled to networks accessible through the wireless communication service provider. For example, a cellular telephone user can access information via the Internet or a laptop-computer user can locate, access, and retrieve files from a remote office LAN, in addition to accessing the Internet.

A user of a mobile-communication device can download a web page or access other information by locating an associated file stored on a device connected to the web. The user can then initiate a print job to create a hard copy of the web page. For example, existing PDAs generally enable printing from the PDA to a printer using a wireless link. However, methods for enabling mobile devices to print a file are problematic.

First, limited storage space on the mobile-communication device hinders the ability of the device to efficiently print data rich content. Second, wireless links can be surreptitiously intercepted. While data encryption techniques can be applied to lessen the likelihood that information will be casually intercepted and misused, encryption and the subsequent decryption in the receiving printer exacerbate the inefficiencies of transferring data over a wireless link.

In addition to inefficiencies related to the bandwidth of the wireless link, printing a file from a mobile-communication device is problematic for additional reasons. Typically, in order to print out a document, it is necessary for an originating device, such as a personal computer (PC), laptop computer, PDA, Pocket PC®, etc., to have a printer device driver loaded prior to being able to print. Pocket PC® is the registered trademark of Thaddeus Computing, Inc. Fairfield, Iowa, U.S.A. The printer device driver provides an abstracted interface between the operating system (OS) and a specific printer to enable the OS and applications running on the OS to communicate with any printer supported by the OS using a common set of text, graphic, and layout commands. This enables developers to create applications without having to be concerned with the specific operations of the various printers that may be used with the application. These printer specific operations are handled by the OS in combination with the printer device drivers.

In today's mobile-business environments, business people often encounter situations in which they are away from their home office, yet need to be able to print documents, files, or other content at either a nearby printer or a select printer proximate to a business contact that they wish to provide a hard copy of the document. Generally, to use either printer to generate a copy of the desired file or content, two things need to happen. First, a mobile-computing device on which the document files are stored (or through which they may be accessed) must be communicatively linked with the destination printer. This can be accomplished indirectly by connecting to a network to which the printer may be accessible, or by directly connecting to the printer via a wireless transceiver, e.g., an IEEE 802.11a compatible transceiver, or a printer cable such as a serial, parallel, or USB cable.

In many cases, both of the direct connection solutions may be impractical or unavailable. For instance, many business printers are designed to be connected to a local area network (LAN). Many of these shared network printers are not configured with a wireless interface. Additionally, a business guest often does not have the authority or the desire to interrupt a network connection to a business host's shared network printer to connect their laptop computer to the network printer. Moreover, many security conscious network administrators would not allow a "foreign" computing device to be coupled to their network to enable indirect communications to a shared network printer.

The second half of the foregoing problem concerns the printer device driver. As discussed above, in order for the mobile-computing device to be able to print via a printer, an appropriate printer device driver must be loaded on the mobile-computing device. In general, a specific device driver will be required for each unique type of printer (even unique models within a similar line of printers). These drivers take time to identify and load. In addition, printer device drivers occupy storage space and can cause software conflicts with applications on the mobile-computing device. Invariably, the business traveler will not have easy access or be able to identify the needed driver. In some instances, a suitable printer device driver may be available on computer-readable media containing OS files and delivered upon the sale of the computing device. Generally, mobile-computer device users do not carry their OS computer-readable media while away from the office. Sometimes, the identified printer is a model that was made available after the OS was released, whereby the business traveler has to wait for a system administrator to provide the printer device driver or download the specific driver via the Internet.

Universal Plug and Play (UPnP) is an open-standard communications protocol for supporting multi-vendor networks. UPnP services and devices operate on networks without administrators. UPnP does not define a programming model. UPnP flexibility enables vendors to implement operating system-specific or device-specific programming models to expose, discover, and use UPnP devices on a network. Windows-based operating systems for example, expose UPnP devices via device and service-specific application-programming interfaces (APIs). These APIs provide a common way to access Internet-protocol connected (IP-connected) UPnP devices, legacy devices connected to Windows-based operating systems via non-IP networks and buses, and non-UPnP devices that are being proxied by another Windows-based computing device coupled to the network.

While UPnP offers a flexible solution for exposing or discovering network coupled printers, the present Windows-based print model requires the print task initiating device to use the operating system, appropriate application software, and the appropriate printer device driver to generate the printer ready data needed to generate a hard copy of Internet content, images, documents, or other files.

Consequently, improved ways are needed to communicate printer ready data from a mobile device to a desired printer.

### SUMMARY

An embodiment of a method for exposing mobile-enterprise printers on a network includes receiving a remotely generated request to identify at least one network-coupled mobile-enterprise print service, using a UPnP print-service proxy to identify a mobile-enterprise print service communicatively coupled on the network, using the mobile-enterprise print service to identify at least one printer device communicatively coupled to the network.

### BRIEF DESCRIPTION OF THE DRAWINGS

A mobile-enterprise print service and a method for method for exposing mobile-enterprise print service printers on a network are illustrated by way of example and not limited by the implementations depicted in the following drawings. The components in the drawings are not necessarily to scale. Emphasis instead is placed upon clearly illustrating the principles of the present mobile-enterprise print service and method. Moreover, in the drawings, like reference numerals designate corresponding parts throughout the several views.

FIG. 1 is a schematic diagram illustrating an embodiment of a computing environment including wireless connectivity from a mobile-communication device.

FIG. 2 is a flow diagram that illustrates an embodiment of a method for printing from the mobile-communication device of FIG. 1.

FIG. 3 is a diagram illustrating an embodiment of a print menu selectable from the mobile-communication device of FIG. 1.

FIG. 4 is a diagram illustrating an embodiment of a print menu having print templates including a reference template selectable from the mobile-communication device of FIG. 1.

FIG. 5 is a diagram illustrating an embodiment of a print menu operable on the mobile-communication device of FIG. 1.

FIG. 6 is a functional block diagram illustrating an embodiment of a computing environment that completes data transfers between a mobile-communication device and network coupled devices.

FIG. 7 is a functional block diagram illustrating an embodiment of the workstation of FIG. 1.

FIG. 8 is a diagram illustrating an embodiment of the mobile-enterprise print service of FIG. 6.

FIG. 9 is a flow diagram illustrating an embodiment of a method for exposing mobile-enterprise print service printers on a network that can be implemented using the mobile-enterprise print service of FIG. 8.

### DETAILED DESCRIPTION

A mobile-communication device provides a mechanism that enables an operator to communicate with a host of devices via one or more wireless links. Any of a number of wireless communication protocols can be used to generate a request for information concerning the availability of a network-coupled printing device designated for use by mobile-communication device operators. A mobile-enterprise print service is configured to respond to requests generated and transmitted by mobile-communication devices proximate to one or more wireless-access points communicatively coupled with a LAN. The mobile-enterprise print service is an addressable logical unit capable of performing a multitude of parallel tasks. For example, the mobile-enterprise print service can be preloaded with a set of drivers corresponding to each printing device coupled to a LAN where the mobile-enterprise print service is hosted. The mobile-enterprise print service is configured with a UPnP proxy that includes information that exposes network-coupled printing devices to users of mobile-communication devices and other clients communicatively coupled to the network. The mobile-enterprise print service generated response to remotely generated requests for a printer are in accordance with information discovered using the UPnP proxy.

The response includes information identifying one or more printers supported by the mobile-enterprise print service. In some embodiments the mobile-enterprise print service forwards user-interface configuration information detailing printer identity, location, and available options for each supported printer. In an alternative embodiment, the mobile-enterprise print service waits for a subsequent selection of the one or more available printers from the mobile-communication device before forwarding printer user-interface information concerning select printer parameters and options.

The mobile-communication device forwards a print command via the wireless access point and the LAN to the mobile-enterprise print service. When the content desired to be printed is located on the mobile-communication device, the content is transferred to the mobile-enterprise print service where it is buffered. The mobile-enterprise print service identifies the data format of the received data and initiates an appropriate software application which is used in conjunction with a printer specific device driver to generate printer-ready data in a format suitable for the select printer. The device driver forwards the printer-ready data to the designated printer. When the content desired to be printed is located on a remote data-storage device or some other computing device accessible via the Internet, or some proprietary or other private network, the mobile-enterprise print service accesses and buffers the data. Once the content is buffered, the mobile-enterprise print service identifies the appropriate data format and processes the information as described above.

In one mode of operation, the mobile-enterprise print service uses printer device drivers to translate generic print commands generated by the mobile-communication device to generate printer-ready data that is used by the printer to create a hard copy representation of information stored within the mobile-communication device. In another mode of operation, the mobile-enterprise print service generates a request for network-accessible content identified in a print command received from the mobile-communication device. After the network-accessible content is received by the mobile-enterprise print service, the mobile-enterprise print service uses an appropriate driver and in some cases an appropriate software application, to translate the network-accessible content into printer-ready data that the mobile-enterprise print service forwards via a device driver corresponding to a select printer.

In this way, a mobile-communication device can direct and control a print device to print information stored in a variety of data formats across a variety of locations. For example, the print service can be configured with a host of application software, thus enabling the print service to offload communication, imaging, and rendering tasks associated with printing *.doc, *.xls, *.pdf, *.jpg, *.html, etc.

The mobile-enterprise print service includes logic for managing print tasks both multiple users and multiple printers. Included in the logic for managing print tasks is the capability to monitor task progress and to generate one or more messages responsive to error conditions reported by the select printer or software modules within the mobile-enterprise print service. When the mobile-communication device print command contains appropriate identifying information such as a phone number and/or an email address, the mobile-enterprise print service forwards messages indicating print task completion and/or any reported errors associated with the print task. Note that clients located on the LAN and/or clients that can access the LAN from Internet or other proprietary or private networks can take advantage of the services provided by the mobile-enterprise print service as well.

The Internet is a world-wide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, government, educational, and other computer systems that route data packets from node to node across the various networks.

The World Wide Web or web refers to the total set of interlinked hypertext documents residing on hypertext transfer protocol (HTTP) servers all around the world. Documents on the web, called pages or web pages, are written in hypertext mark-up language (HTML) identified by uniform resource locators (URLs) that identify the particular machine and pathname by which a file can be accessed and transmitted from node to node to the end user using HTTP. HTML-based pages contain standard text as well as formatting codes that indicate how the page should be displayed. A web site is a related group of these documents and associated files, scripts, subprocedures, databases, etc. that are provided by an HTTP server coupled to one of the various networks.

Users of mobile-communication devices need an application program generally called a "browser" and a communication link to the Internet to access a web site. Browsers are software applications that locate, request, receive, and display content stored within a specific device coupled to the Internet. Popular browsers for laptop and desktop computing devices are graphical browsers. Graphical browsers display graphics including text. Browsers for mobile-communication devices generally display text information, although more recent communication services provide some graphics and sound.

Web browsers also enable a user to navigate the Internet, i.e., view HTML files stored on a web-connected device, view data stored on another network, or access data stored on a user's computing device or the user's mobile-communication device. A user can navigate the Internet by entering a URL in an address-entry field provided by the browser or selecting a "link" embedded in a displayed representation of an HTML file. A user can navigate network-coupled devices by entering appropriate paths in the address-entry field. Once the user has found a folder or file of interest, the user can enter a command to view the contents of the folder or open the file-of-interest. When the file-of-interest is a HTML file, the browser displays the file like any other web page. Since mobile-communication devices often are not equipped to store and run robust software applications, the representation of the downloaded or otherwise identified HTML file is often limited to text.

The mobile-enterprise print service and the associated method for exposing mobile-enterprise print service printers on a network to users of mobile-communication devices leverages a number of techniques to enable an unlimited host of print task capabilities to clients and guests of the mobile-enterprise print service.

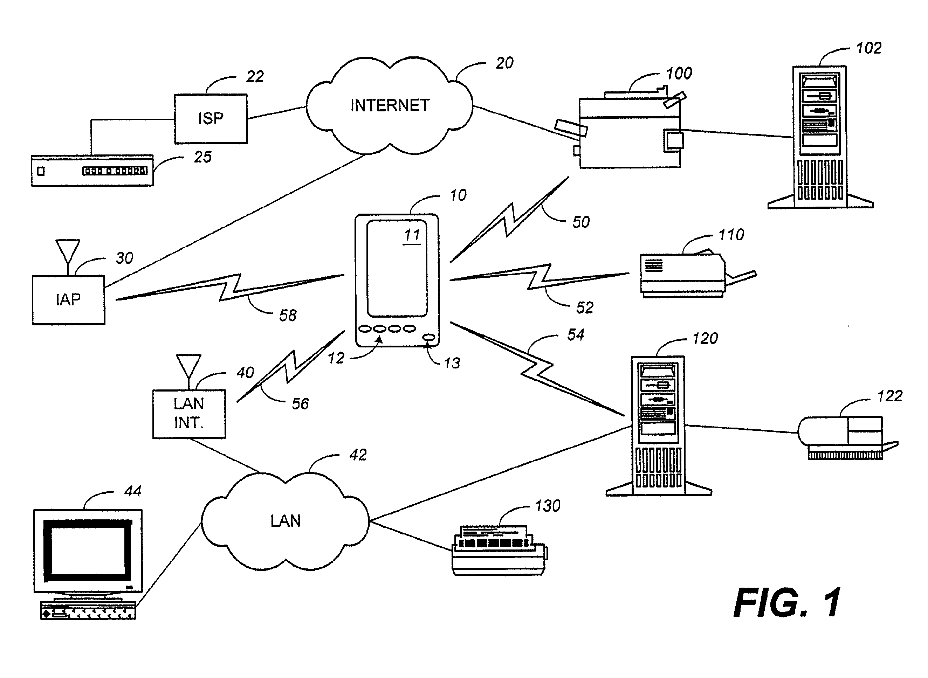

Reference is now directed to the various embodiments illustrated in the figures briefly described above. FIG. 1 is a schematic diagram illustrating communication and printing options available to a mobile-communication device 10. In the example of FIG. 1, the mobile-communication device 10 is a personal digital assistant (PDA). Alternatively, the mobile-communication device 10 can be a cellular phone, a pager, or any type of portable device configured with a wireless interface.

Mobile-communication device 10 includes display 11, function keys 12, and a data transmit button 13. Display 11 presents one or more interactive graphical and/or textual interfaces or menus that are selected and operable via one or more of the function keys 12. Alternatively, display 11 can be a touch screen for receiving inputs from a user of the mobile-communication device 10. While in this embodiment a user of the mobile-communication device 10 navigates the menus and depresses data transmit button 13 to make a print selection, other mechanisms for making a print selection via display 11 can be used. For example, a print icon can be integrated with display 11. As described below, the mobile-communication device 10 enables a user to control a communicatively coupled printer and direct a print service to command the printer to print content stored anywhere across a network. Content includes web pages, documents, spreadsheets, presentations, photographs, etc. accessible via a network.

Mobile-communication device 10 communicates with one or more network coupled devices via wireless communication links 50, 52, 54, 56, and 58. Wireless communication links 50, 52, 54, 56, and 58 can be infrared (IR) or radio-frequency (RF) links capable of transferring data and/or commands to and/or from mobile-communication device 10 to each of the receiving devices. A variety of wireless communication interfaces and data-transfer protocols support the communication of alphanumeric information from a portable device such as mobile-communication device 10 and an appropriately configured receiving device. For example, infrared data association protocol (IrDA), wireless fidelity (IEEE 802.11 wireless networking) or Wi-Fi, Bluetooth® , etc. each support wireless data transfers. Bluetooth® is the registered trademark of Bluetooth SIG, Inc.

Bluetooth® is particularly useful for data transfers between mobile-communication device 10 and appropriately configured printers, computers, LAN interfaces, and Internet service provider (ISP) wireless-access points. Bluetooth® uses a number of RF channels between 2.40 and 2.48GHz to communicate data. Since Bluetooth® uses a RF transmission medium, communicating devices do not need to be in the line-of-sight of each other's IR beam. Bluetooth® also frequency hops i.e., it changes frequencies over a thousand times a second using nearly eighty channels within the 2.40 and 2.48GHz frequency range. Consequently, even though Bluetooth® shares this frequency range with cordless phones, baby monitors, and 802.11 wireless networks, data transmission disruptions are negligible.

Perhaps the most significant feature of Bluetooth® technology that makes it well-suited for communicating with a remote device such as the mobile-communication device 10 is that Bluetooth® -enabled devices can find and establish a communication link with each other without the user having to initiate the link. When two Bluetooth®-enabled devices come within signal range of each other, they immediately begin a series of negotiations to determine if they have information for one another. If the negotiation session results in a determination that the devices have information for one another, the devices form a piconet or a personal area network. Consequently a Bluetooth® -enabled mobile-communication device 10 can automatically establish communication links 50, 52 with Bluetooth®-enabled printers 100, 110. Furthermore, Bluetooth® -enabled devices rely on a set of rules or profiles for communicating particular types of data. Typical profiles, include a serial-port profile for communicating printer-ready data and or otherwise connecting devices such as printers and scanners. Bluetooth® also includes an object-push profile for moving data between devices, a synchronization profile for PDA synch operations, a facsimile profile, which allows a personal computer (PC) to use a Bluetooth® -enabled cellular phone as a facsimile modem.

While Bluetooth® -enabled devices have been described above in association with the schematic of FIG. 1, those of ordinary skill in the art will understand that wireless data-transfer protocols IrDA, 802.11(a), 802.11(b), etc. are also capable of establishing a communication link 50, 52, 54, 56, and 58 capable of communicating data and print commands in accordance with the present mobile-enterprise print service and method.

As illustrated in FIG. 1, communication link 50 enables mobile-communication device 10 to communicate with printer 100. Printer 100 is further coupled to computer 102 and Internet 20. Internet 20 is communicatively coupled to ISP 22 and wireless Internet-access point 30. Consequently, communication link 50 enables a user of mobile-communication device 10 to locate, retrieve, and/or interact with data and applications stored in web server 25 which is coupled to the Internet 20 via ISP 22. Communication link 58 is wirelessly coupled to wireless Internet-access point 30 thus providing an alternative path for mobile-communication device 10 to access Internet 20 and Internet coupled devices.

Communication link 52 wirelessly couples mobile-communication device 10 to printer 110. Communication link 54 wirelessly couples mobile-communication device 10 to computer 120. Computer 120 is further coupled to printer 122 and LAN 42. Consequently, computer 120 is communicatively coupled to printer 130 and workstation 44 via LAN 42. Communication link 56 is wirelessly coupled to wireless LAN-access point 40 thus providing an alternative path for mobile-communication device 10 to access LAN 42 and LAN-coupled devices.

Printer 100 is a high-speed multiple-source printer. Printer 110 is a laser printer. Printer 122 is an inkjet printer. Printer 130 is an impact printer. Mobile-communication device 10 can initiate and transmit a print command via communication link 50 to printer 100. When mobile-communication device 10 includes a printer driver compatible with printer 100, printer-ready data can be communicated to and printed by printer 100. Mobile-communication device 10 can direct a print task to printer 110 in a similar fashion.

Mobile-communication device 10 can direct a print task to printer 122 by transferring content to computer 120. The print task can include a reference to content rich data stored on computer 120 or workstation 44. When LAN 42 is coupled to the Internet 20 (LAN 42 is not coupled to Internet 20 in FIG. 1), computer 120 can download content rich data from web server 25 and/or computer 102. Computer 120 accesses the referenced content and forwards the data to printer 122 for printing.

Mobile-communication device 10 can direct a print task to printer 130 by transferring content to computer 120. Computer 120 forwards the data via LAN 42 to printer 130. The print command can include a reference to content stored on computer 120 or workstation 44. When LAN 42 is coupled to the Internet 20, computer 120 can download content from web server 25 and/or computer 102. Computer 120 accesses the referenced content and forwards the data to printer 130 via LAN 42 for printing.

Printers 100, 110, 122, 130 can be located in physical proximity with mobile-communication device 10 or can be in a remote location, even in a different country, from mobile-communication device 10. For example, any of the printers 100, 110, 122, 130 can be located in a kiosk in a public place such as an airport. Alternatively, any of the printers 100, 110, 122, 130 can be located within a place of business, or within a user's home. Printers 100, 110, 122, 130 can be, for example, high-volume multiple-function printers, laser printers, inkjet printers, all-in-one office devices with print capability, inkjet printers, and so on.

In an embodiment, use of data-transmit button 13 initiates a seamless integration of these (as well as future) printing models that can be applied to any content delivered to and/or addressable by mobile-communication device 10. Content includes a full range of printable material from word-processing, spreadsheet, and other office applications, as well as high-resolution photographs, web pages, web accessible coupons, etc.

Preferably, although not required, various printing technologies are integrated into a module that resides within and is accessible to a browser on mobile-communication device 10 and is accessible by a browser operable on the mobile-communication device 10. For example, if mobile-communication device 10 is a Pocket PC® , available commercially from the Hewlett-Packard Company, the module is implemented as an ActiveX® control for Pocket Internet Explorer. ActiveX® is the registered trademark of Microsoft Corporation, Redmond Washington, U.S.A.

If mobile-communication device 10 is a Palm® device, available from Palm, Inc., the module is implemented as a pod for the AvantGo® browser. AvantGo® is the registered trademark of AvantGo, Inc. San Mateo, California, U.S.A. If mobile-communication device 10 is a wireless Palm®, such as the Palm VII™, available from Palm, Inc., the module is implemented as a "*.prc" application for the Web Clipper browser. Palm® is the registered trademark of Palm, Inc., Santa Clara, California, U.S.A.

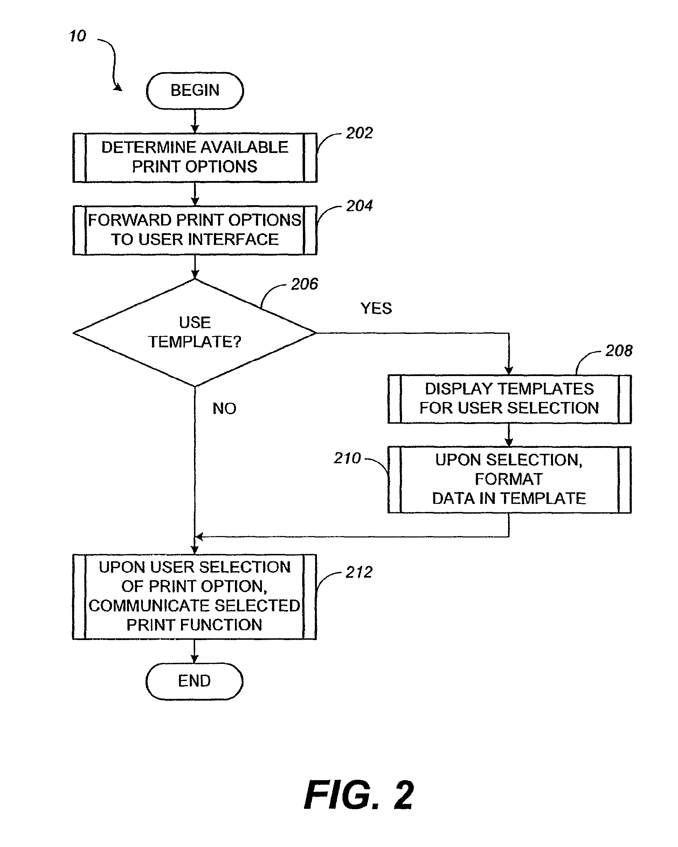

FIG. 2 is a flow diagram illustrating operation of the print module upon selection of data-transmit button 13. In block 202, the mobile-communication device 10 determines available print options. Available print options can include direct data transfers using an IR-communication link, a Bluetooth® link, etc. Other available print options can include indirect data communications via a cellular-communication service. As indicated in block 204, once, the mobile-communication device 10 has determined the available print options, the device forwards an indication of the options to a user interface, such as display 11. Next, a determination is made as indicated in determination block 206 whether to use a print-selection interface template.

When it is determined that a print-selection interface template is desired as indicated by the flow-control arrow labeled, "YES" exiting determination block 206, mobile-communication device 10 displays the templates for user selection as shown in block 208. Thereafter, as indicated in block 210, upon selection of a template by the a user of the mobile-communication device 10, data is formatted and prepared for subsequent transmission in accordance with a selected print mechanism. Otherwise, when it is not desired to use a print-selection template to assist in configuring display 11, as indicated by the flow-control arrow labeled, "NO" exiting determination block 206, for example, when a user of the mobile-communication device 10 has installed components that support only a single data-transmission mechanism, data is transmitted in accordance with a default-transmission mechanism as indicated in block 212.

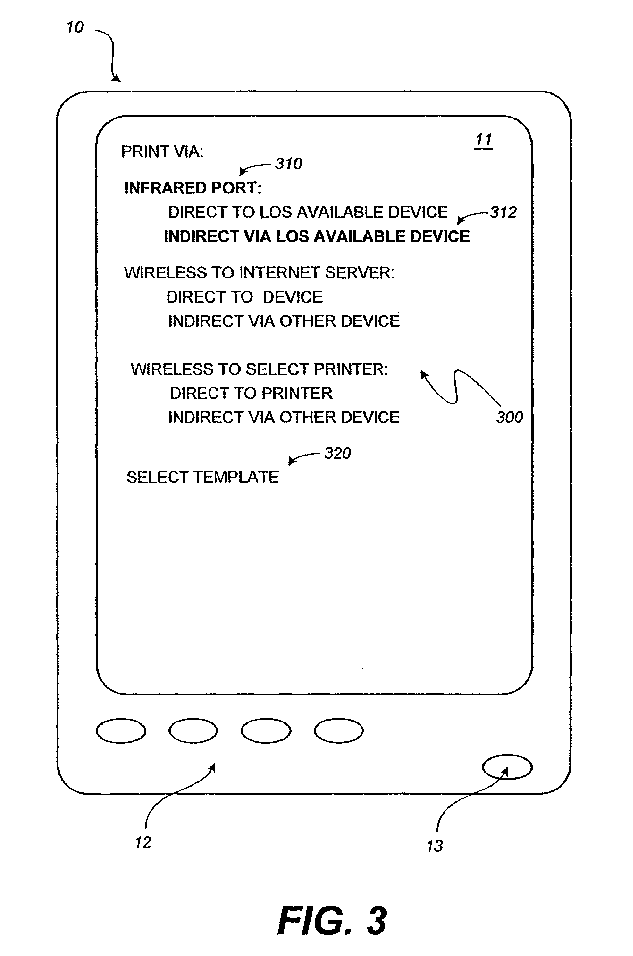

FIG. 3 illustrates an embodiment of display 11 resulting from block 204. The displayed print options 300 include printing from an IR port 310 as well as a wireless port to an Internet-access point and via a wireless port to a select printer. Each of the available print options has two sub options. A direct printing sub option indicates that the mobile-communication device 10 communicates directly with a specific printer. The indirect printing sub option indicates that the mobile-communication device 10 forwards one or more references to a computer, a wireless network-access point or some other device communicatively coupled to a designated printer. The references include information identifying the designated printer. The references may also include information identifying one or more files, web pages, etc. that the user desires to print.

The user of the mobile-communication device 10 makes a print-options choice in accordance with present conditions. The choice can depend, for example, on the capabilities of the mobile-communication device 10, the availability of various printing devices, the availability of a wireless service, etc.

As indicated by the bold text, a user has selected indirect printing via a line-of-sight available communication device 312. FIG. 3 also illustrates that display 11 provides an option for a user of the mobile-communication device 10 to select a print-selection template 320. A print-selection template 320 presents a graphic and/or pre-defined interface layout residing on the mobile-communication device 10. Information stored on the mobile-communication device 10 such as contacts, appointments, notes, to-do lists, and so on can be formatted and printed using the templates with the resulting output being much higher in quality than with simple formatting.

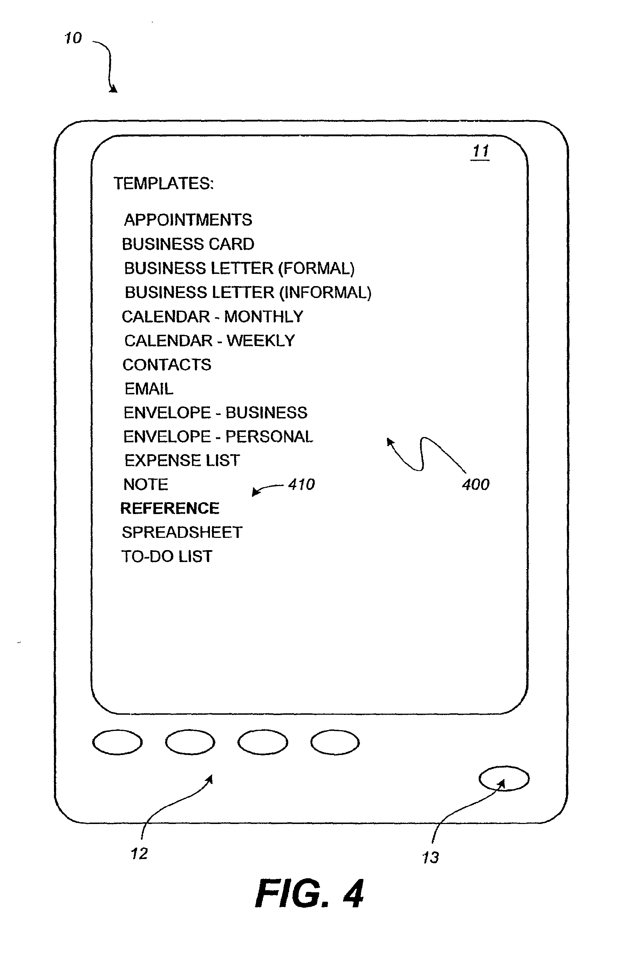

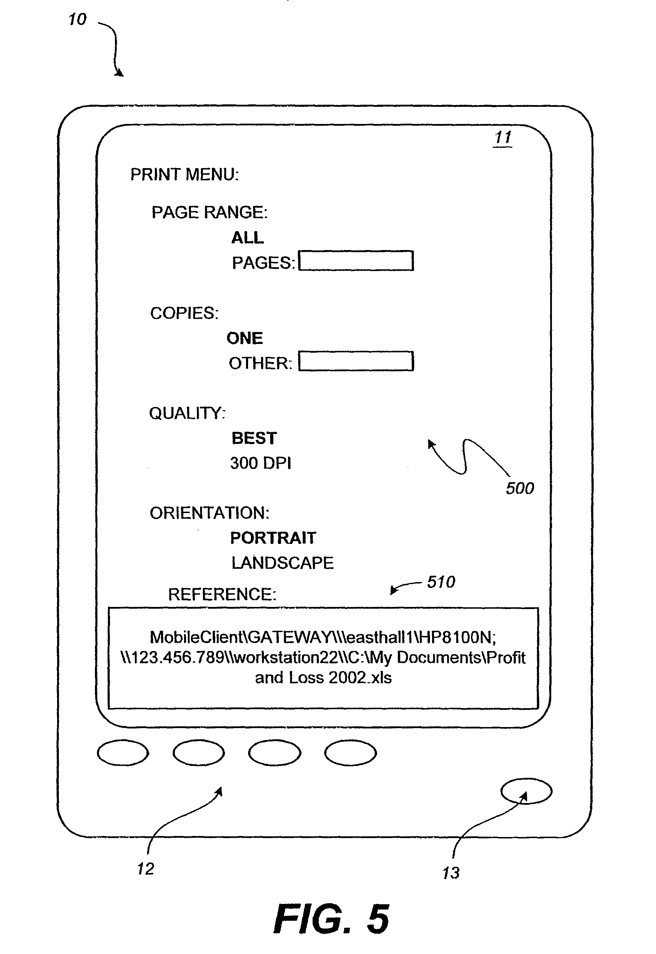

FIG. 4 illustrates the result of block 208 in the flow diagram of FIG. 2. A plurality of print templates 400 are presented to the user via display 11. As indicated in FIG. 4, one of the available print templates is a reference template 410. Upon selecting the reference template 410, a user of the mobile-communication device 10 is presented the user interface of FIG. 5. As shown in FIG. 5, the user is presented with an interface that includes a print-options menu 500 complete with a reference input field 510 for identifying a select printer device available on LAN 42 or Internet 20 (FIG. 1) and in some cases the location of content that the user desires to print. As explained above, content includes files stored on a computer, such as photographs, spreadsheets, presentations, documents, web pages, etc. The example illustrated in FIG. 5 identifies an HP8100 printer communicatively coupled in a proximately located LAN. The HP8100 is identified as a select printer for providing a hard copy of identified content. More specifically, the content in the example illustrated in FIG. 5, is a Microsoft Excel data format file entitled, "Profit and Loss 2002.xls." As indicated in the reference input field 510, the content is further identified via an identified Internet node, a workstation coupled to the Internet node, and a logical disk drive and file folder where the content is stored. The information provided by the user of the mobile-communication device 10 via reference input field 510 identifies a select printer and select content to send to the printer.

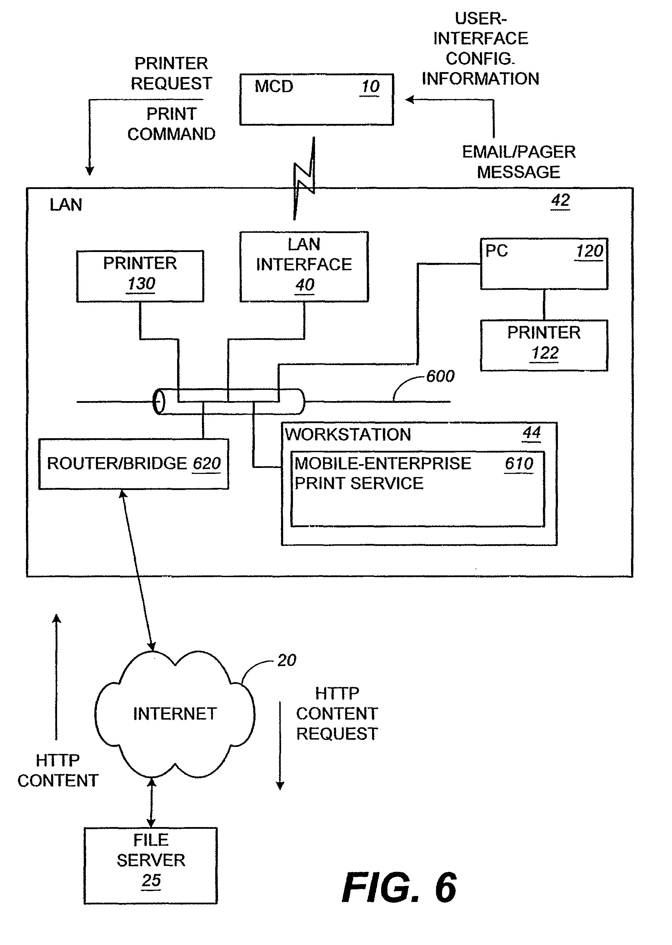

FIG. 6 is a functional block diagram illustrating data transfers between the mobile-communication device and network coupled devices of FIG. 1. In the example shown in FIG. 6, printer 130, LAN interface 40, PC 120, router/bridge 620, and workstation 44 are communicatively coupled by LAN backbone 600. LAN backbone 600 can be any of a number of different LAN backbones including ethernet, a wireless LAN, etc. As illustrated in FIG. 6, workstation 44 is configured with a mobile-enterprise print service 610.

Mobile-enterprise print service 610 is a collection of logic modules each containing a plurality of executable instructions for performing specific tasks. For example, mobile-enterprise print service 610 can be configured with an interface that enables users of remote devices to identify a proximal printer for generating a hard copy of information stored within the mobile-communication device 10 or content referenced by the mobile-communication device 10. In addition to making one or more printers available for users of mobile-communication devices, mobile-enterprise print service 610 includes commercial software applications commonly used by LAN clients and visitors to the establishment hosting the LAN. For example, the mobile-enterprise print service 610 can include the Microsoft Office Suite of software applications, Adobe's Acrobat, etc. Mobile-enterprise print service 610 also includes a printer device driver for each printer coupled to LAN 42. As will be explained in further detail below, mobile-enterprise print service 610 uses the combination of the appropriate application software and the printer device driver to generate printer-ready data compatible with the select printer. Consequently, a user of the mobile-communication device 10 can direct a print task of content hosted on a remotely located data storage device to a proximal printer without hosting a data format specific application and/or storing a copy of the content on the mobile-computing device 10. Furthermore, the mobile-communication device 10 no longer has to locate and download a printer specific driver to direct the print task.

In operation, mobile-communication device 10 forwards a printer request via LAN interface 40 to devices coupled to LAN 42. Mobile-enterprise print service 610 is configured to automatically respond to printer resource requests by returning user-interface configuration information to the mobile-communication device 10 that initiated the printer request. The user-interface configuration information includes data identifying one or more printers coupled to LAN 42 under the control of mobile-enterprise print service 610. In addition, the user-interface configuration information can include information informing the mobile-communication device 10 of printer specific parameters associated with each printer coupled to LAN 42 available for mobile users. Those having ordinary skill in the art will understand that user-interface configuration information may be communicated in an iterative process responsive to a printer request and/or command identifying a specific printer.

As is further shown in FIG. 6, mobile-communication device 10 generates and transmits a print command that is received and processed by mobile-enterprise print service 610. When the print command contains a reference to information that is not stored on a device coupled to LAN 42, mobile-enterprise print service 610 generates a HTTP content request which it forwards via router/bridge 620 to the referenced file server 25. As shown in FIG. 6, router/bridge 620 communicatively couples LAN 42 including mobile-enterprise print service 610 to Internet 20 which is further coupled to file server 25. File server 25, in turn, forwards the requested HTTP content to mobile-enterprise print service 610. Mobile-enterprise print service 610 receives the designated content, identifies the data format, and generates printer-ready data using an appropriate printer-device driver for the select printer. Once the mobile-enterprise print service 610 has generated the printer-ready data, printer task control logic within mobile-enterprise print service 610 forwards the printer-ready data via LAN 42 to the select printer. Mobile-enterprise print service 610 is also configured to generate an email and/or a text message such as a pager message directed to an email address and/or a telephone number identified by mobile-communication device 10 in the print command. Email and/or text messages can include print task status, error information, etc.

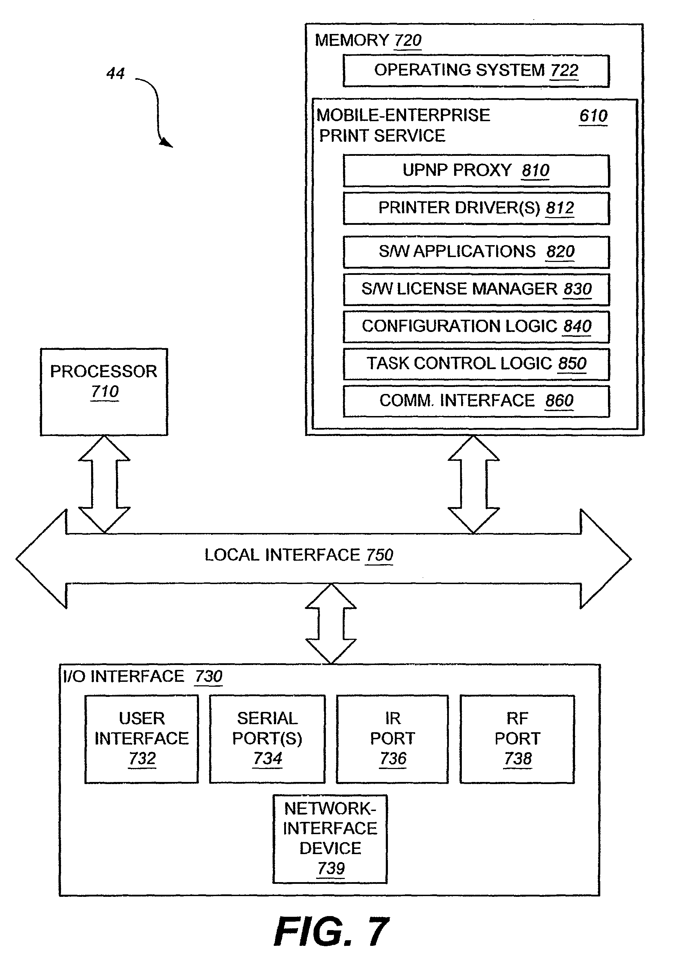

FIG. 7 is a block diagram illustrating an embodiment of a computer device architecture that can be used to enable workstation 44. Generally, workstation 44 includes a processor 710, memory 720, and an input/output (I/O) interface 730 that are communicatively coupled via local interface 750.

Local interface 750 can be, for example but not limited to, one or more buses or other wired or wireless connections, as is known in the art or may be later developed. Local interface 750 may have additional elements, which are omitted for simplicity, such as controllers, buffers (caches), drivers, etc. to enable communications. Further, local interface 750 may include address, control, and/or data connections to enable appropriate communications among peripherals coupled to workstation 44.

In the embodiment of FIG. 7, the processor 710 is a hardware device for executing software that can be stored in memory 720. The processor 710 can be any custom-made or commercially-available processor, a central-processing unit (CPU) or an auxiliary processor among several processors associated with the workstation 44 and a semiconductor-based microprocessor (in the form of a microchip) or a macroprocessor.

The memory 720 can include any one or combination of volatile memory elements e.g., random-access memory (RAM), such as dynamic-RAM or DRAM, static-RAM or SRAM, etc. and nonvolatile-memory elements e.g., read-only memory (ROM), EPROM, EEPROM, etc. Moreover, the memory 720 may incorporate other types of storage media now known or later developed such as floppy disk drives, hard-disk drives, portable media drives, a redundant array of inexpensive disks (RAID) device, etc. Note that the memory 720 can have a distributed architecture, where various components are situated remote from one another, but accessible by processor 710.

The software in memory 720 may include one or more separate programs, each of which comprises an ordered listing of executable instructions for implementing logical functions. In the example of FIG. 7, the software in the memory 720 includes operating system 722 and a mobile-enterprise print service 610. The mobile-enterprise print service 610 includes one or more UPnP Proxies 810, one or more printer drivers 812, software applications 820, a software license manager 830, configuration logic 840 task control logic 850, and a communication interface logic 860.

Operating system 722 preferably controls the execution of software modules associated with the mobile-enterprise print service 610 including software applications 820. Operating system 722 controls the execution of UPnP Proxy 810, printer drivers 812, software license manager 830 as well as configuration logic 840, task control logic 850, and communication interface 860. In addition, operating system 722 provides task scheduling, input-output control via I/O interface 730, memory management, and communication control and related services.

In an embodiment, mobile-enterprise print service 610 is one or more source programs, executable programs (object code), scripts, or other collections each comprising a set of instructions to be performed. It will be well understood by one skilled in the art, after having become familiar with the teachings presented, that the various modules and/or components of the mobile-enterprise print service 610 may be written in a number of programming languages now known or later developed.

I/O interface 730 includes a user interface 732 which may include functional pushbuttons, a touch activated screen, interactive-pointing devices, voice-activated interfaces, or other operator-machine interfaces (omitted for simplicity of illustration) now known or later developed. Serial ports 734 may include a parallel printing interface, a universal serial bus (USB) interface, etc. To directly communicate with mobile-communication device 10, workstation 44 is configured with IR port 736 and RF port 738. As previously described IR port 736 and RF port 738 can be configured to support various different wireless communication protocols compatible with mobile-communication device 10. Network-interface device 739 is configured to support LAN/WAN communications.

Those skilled in the art will understand that the some of modules associated with the mobile-enterprise print service 610 can be implemented in hardware, software, firmware, or combinations thereof. In an embodiment, the mobile-enterprise print service 610 is implemented using a combination of software that is stored in memory and executed by a suitable instruction-execution system. If implemented solely in hardware, as in an alternative embodiment, the various components of the mobile-enterprise print service 610 can be implemented with any or a combination of technologies which are well-known in the art (e.g., discrete-logic circuits, application-specific integrated circuits (ASICs), programmable-gate arrays (PGAs), field-programmable gate arrays (FPGAs), etc.), and/or later developed technologies.

In an embodiment, the functions of the mobile-enterprise print service 610 are implemented using a combination of software and data executed and stored within workstation 44. It should be noted, however, that these instruction units may vary but are not dependent upon the nature of the underlying computer-device architecture.

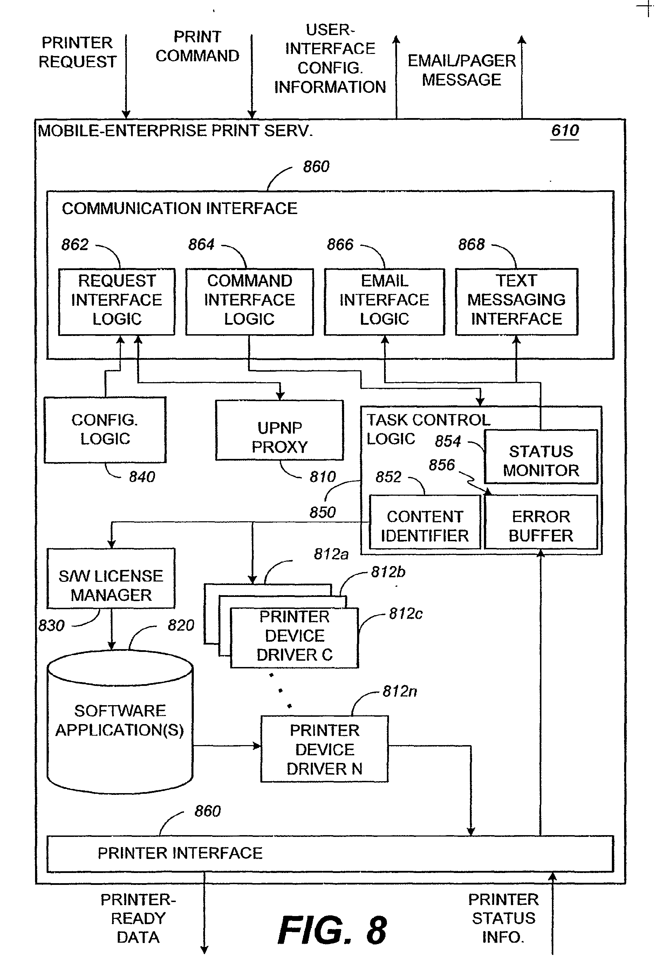

FIG. 8 is a functional block diagram illustrating the various components and/or functional modules associated with the mobile-enterprise print service 610 of FIG. 6. As shown in FIG. 8, mobile-enterprise print service 610 receives printer requests and print commands from one or more mobile-communication devices 10 (FIG. 1) at communication interface 860. In response to printer requests, communication interface 860 processes the request using request interface logic 862 and configuration logic 840. Request interface logic 862 is configured to check the client's identity and uses UPnP proxy 810 and UPnP protocols to expose or otherwise identify one or more printers coupled to LAN 42 that are available to receive print requests from mobile clients. UPnP uses the simple service discovery protocol (SSDP) for discovery of devices on IP-based networks. SSDP uses profiles that define the relationship between the client and the service. Clients send a user datagram protocol (UDP) multi-cast packet containing the identifier of the desired service, e.g., a print service, a printer, etc. Services listen for the multi-cast packets and respond to only those UDPs that match services that they provide. UPnP directories provide a scalable mechanism to allow discovery. When present a directory reads and responds to all UDP requests. All each UPnP service has to do is register itself with the directory.

To simplify the discovery process, directories are treated as proxies for the service. A proxy accepts requests and takes responsibility for finding the proper response. When a proxy is present on the network, the client sends future discovery requests tot he proxy. When a proxy is not present, the client sends requests via a multi-cast channel. The request format is the same in both the proxied and the unproxied networks.

The discovery response includes only that information needed to connect to the requested service or device. A description schema is then used to communicate information about service and/or device specifics. Once the client and one or more proximate printers have been identified, and device specific information communicated, request interface logic 862 polls configuration logic 840 to generate appropriate user-interface configuration information that is forwarded back to the mobile-communication device 10.

Print commands received at communication interface 860 are processed by command interface logic 864 which associates a print task identifier with the mobile-communication device 10 and/or the mobile client operating the device. Print commands contain information identifying a select printer and either contain content stored on the mobile-communication device 10 that the mobile client desires to print or a reference to content stored on a device accessible via the mobile-enterprise print service 610. The print task identifier, printer identifier, and content and/or content reference are forwarded to task control logic 850.

Task control logic 850 includes a content identifier 852, a print task status monitor 854 and an error buffer 856. The print task identifier and printer identifier are forwarded to status monitor 854 which is configured to manage and record all aspects of the remotely commanded print task. Content identifier 852 identifies the data format of the file, photograph, web page, or other content designated by the mobile client as desirable to print. When mobile-device generated print commands identify content stored on the mobile-communication device 10 the content is translated into printer-ready data by one of printer device driver 812a, 812b, 812c, ..., 812n specifically configured for the select printer. Otherwise, when mobile-device generated print commands reference content stored on some other device communicatively coupled to workstation 44 (FIG. 1), content identifier 852 communicates with software license manager 830 to verify that the mobile-enterprise print service 610 is configured with the appropriate license authority to operate an appropriate software application in software application store 820. An appropriate software application is used in conjunction with one of the printer device drivers 812 to generate printer-ready data that is forwarded via printer interface 860 to the select printer.

The select printer communicates printer status information via printer interface 860 to the task control logic 850. Printer status information includes operational status, including any error conditions, source information, user configurable and default printer parameters, and print job status, etc. Printer status information is communicated to error buffer 856 and status monitor 854. As illustrated in FIG. 8, printer status information can be formatted in either or both email interface logic 866 and text messaging interface 868 to generate an email/pager message that can be communicated back to the client's designated email address and/or telephone number. In this way, the mobile client can be notified of job completion, error conditions, etc. when they are not proximally located with the select printer to determine the job status and/or error conditions directly.

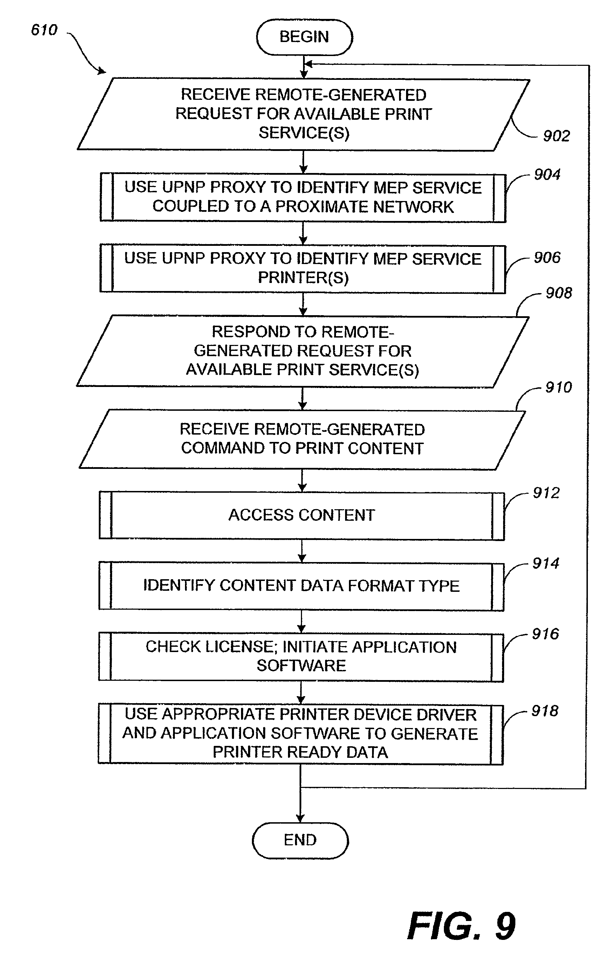

Reference is now directed to FIG. 9, which presents an embodiment of a an embodiment of a method for exposing mobile-enterprise print service printers on a network that can be implemented using the mobile-enterprise print service of FIG. 7. As shown in input/output block 902, the mobile-enterprise print service 610 is configured to receive remote-generated requests for available print service(s). As described above, available print services include exposing and/or otherwise identifying printer hardware, device drivers, UPnP proxies, task control logic, printer configuration logic, as well as enable remote data access, and content rendering into printer-ready data. As indicated in block 904, a UPnP proxy is used to identify the mobile-enterprise print service 610 in response to the request. In block 906, the UPnP proxy is further used to identify available printers that can be used under the direction and control of the mobile-enterprise print service 610.

As further illustrated in input/output block 908, the mobile-enterprise print service 610 is configured to respond to the remote-generated request. The response includes an identifier for the one or more print services communicatively coupled and proximate to the mobile -communication device 10 and information identifying printers available to the client operating the mobile-communication device 10. It will be understood that the mobile-enterprise print service 610 may be pre-configured by an administrator of the system to grant limited and/or up to complete access of both mobile-enterprise print service functions and/or printer resources proximate to the mobile client and coupled to the network.

In input/output block 910, the mobile-enterprise print service 610 receives a remote-generated command to print content. Next, as indicated in block 912, the mobile-enterprise print service 610 accesses the designated content identified in the remote-generated print command. When the content is stored on the mobile-communication device 10, the mobile-communication device 10 and the mobile-enterprise print service communicate until the data is buffered in the mobile-enterprise print service. When the content is stored on a remote device, the mobile-enterprise print service uses a reference communicated in the print command to access the content.

Once the content is buffered, the mobile-enterprise print service 610 identifies the data format type of the buffered content, as indicated in block 914. Next, as indicated in block 916, the mobile-enterprise print service 610 checks for license authority and initiates an appropriate software application. As shown in block 918, the mobile-enterprise print service 610 uses the software application in association with a printer specific device driver to generate printer-ready data. Once printer-ready data is available, the mobile-enterprise print service 610 forwards printer-ready data to the identified printer. It will be understood that the functions described in association with blocks 902 through 918 can be repeated as may be desired and/or the method presented may be terminated and/or otherwise controllably made accessible to one or more clients in accordance with one or more desired security schedules managed by the mobile-enterprise print service or other software.

Any process descriptions or blocks in the flow diagrams presented in FIGS. 2 and 9 should be understood to represent modules, segments, or portions of code or logic, which include one or more executable instructions for implementing specific logical functions or blocks in the associated process. Alternate implementations are included within the scope of the present system and method in which functions may be executed out of order from that shown or discussed, including substantially concurrently or in reverse order, depending on the functionality involved, as would be understood by those reasonably skilled in the art after having become familiar with the teachings presented.

## Claims

1. A method for exposing mobile-enterprise printers (100, 110, 122, 130) on a network (20, 42), comprising:
receiving a remotely generated request to identify at least one network-coupled mobile enterprise print service (902);
using a UPnP print-service proxy to identify a mobile-enterprise print service communicatively coupled on the network (904); and
using the mobile-enterprise print service to identify at least one printer device communicatively coupled to the network (906).

2. The method of claim 1, further comprising:
forwarding content to the at least one printer device (100, 110, 122, 130) via the UPnP print-service proxy (810).

3. The method of claim 1, further comprising:
using the mobile-enterprise print service (610) to direct the at least one printer (100, 110, 122, 130) to respond to a remotely generated command to print content.

4. The method of claim 3, wherein using the mobile-enterprise print service (610) to direct the at least one printer (100, 110, 122, 130) to respond to a remotely generated command to print content comprises identifying a content type.

5. A system, comprising:
an interface (860) configured to receive a remotely generated request from a mobile-communication device (10) to identify at least one proximate-printer device (100, 110, 122, 130) available on a network (20, 42); and
a mobile-enterprise print service (610) comprising a universal plug and play proxy (810) associated with the at least one proximate-printer device (100, 110, 122, 130), wherein the universal plug and play proxy (810) exposes the at least one proximate-printer device (100, 110, 122, 130) to devices coupled to the network (20, 42), the mobile-enterprise print service (610) including logic configured to respond to the remotely generated request.

6. The system of claim 5, wherein the mobile-enterprise print service (610) further comprises a printer-device driver (812) for generating printer-ready data for the at least one proximate-printer device (100, 110, 122, 130).

7. The system of claim 5, wherein the mobile-enterprise print service (610) further comprises logic configured to respond (850) to a remotely generated print command.

8. The system of claim 7, wherein the logic configured to respond (850) identifies content by a data format.

9. The system of claim 7, wherein the logic configured to respond (850) enables application software (820) responsive to the data format.

10. The system of claim 7, wherein the logic configured to respond (850) forwards printer-ready data to the at least one proximate-printer device (100, 110, 122, 130).
